# NOUVEAU FASCICULE DE BREVET EUROPEEN

(11) **EP 1 215 444 B2**
(45) Date de publication et mention de la décision concernant l'opposition: **10.08.2011**
(45) Mention de la délivrance du brevet: 30.06.2004
(21) Numéro de dépôt: 01403103.3
(22) Date de dépôt: 04.12.2001
(51) Int. Cl.: F24C 15/32, A21B 3/04, F24C 15/20

(54) **Dispositif de four et procédé de commande d'un four**
Ofen und Verfahren zu seiner Steuerung
Oven and control method therefor

(30) Priorité: 15.12.2000 FR 0016407
(43) Date de publication de la demande: 19.06.2002
(73) Titulaire: Thirode Grandes Cuisines Poligny, 39800 Poligny (FR)
(72) Inventeur: Lubrina, Yves, 39800 Poligny (FR); Medigue, Jean-Pierre, 39800 Poligny (FR)
(74) Mandataire: Durand, Patrice

(56) Documents cités:
- EP-A- 0 694 260
- EP-A- 0 731 319
- EP-A- 0 959 305
- WO-A-99/33347
- DE-A- 3 821 205
- DE-A- 11 972 445

## Description

La présente invention concerne le domaine des procédés de commande de fours, notamment culinaires, de type individuel, par exemple pour l'équipement de la maison, de type collectif, par exemple pour une cantine scolaire ou d'entreprise, ou encore industriel pour la préparation de plats cuisinés dans le domaine agroalimentaire.

La cuisson de certains aliments pose des problèmes délicats de réglage de température et de conduite de la cuisson, en raison de modifications d'aspect et de goût importantes qu'ils sont susceptibles de subir. La cuisson de la viande rouge, telle que le rosbif, est une des plus délicate. L'utilisateur ou le consommateur peut souhaiter une cuisson bleue, saignante ou à point, également appelée « bien cuit ». L'écart de température à coeur du rosbif entre ces trois types de cuisson est de l'ordre de 1 ou de 2°C.

On connaît la cuisson dite « classique » en ambiance sèche ou en présence de vapeur, à température élevée très largement supérieure à la température à coeur souhaitée dans le produit. Le réglage du four est simple : on détermine une température et une durée. Une sonde de température fichée dans le milieu du rosbif peut aider à définir la fin de la cuisson. La durée de cuisson est courte. Le rosbif a l'aspect extérieur souhaité avec un coeur plus ou moins rouge ou rosé et une croûte extérieure légèrement grillée. Le rosbif peut être directement tranché et servi, sans opération ultérieure.

Toutefois, il est très difficile de bien maîtriser le degré de cuisson. L'écart important de température entre le coeur du rosbif et sa surface, génère une grande inertie. Il faut estimer précisément cette inertie pour sortir le rosbif du four bien avant que sa température à coeur objectif soit atteinte, laisser reposer à l'extérieur du four, en espérant que l'inertie thermique permette d'approcher au mieux la température à coeur souhaitée, puis trancher au bon moment. Il peut se produire un rétreint important se produisant par des pertes de poids. La tendreté et la jutosité du rosbif ne sont pas optimales, la pièce de boeuf pouvant se durcir et perdre son jus lors du tranchage. Deux rosbifs de taille différente ne pourront avoir le même degré de cuisson et devront donc être sortis du four à plusieurs minutes de décalage, ce qui est particulièrement gênant dans le cas d'une cuisine collective. En outre, un rosbif de qualité moyenne se retrouvera également avec un aspect et un goût de qualité moyenne après cuisson.

Le temps de repos et d'homogénéisation de la température à l'extérieur du four après la cuisson n'est guère satisfaisant d'un point de vue sanitaire, le rosbif étant exposé à des salissures, aux pollutions extérieures et pouvant rester trop longtemps au repos. La cuisson à température élevée produit souvent d'importantes projections graisseuses sur les parois du four. Les projections carbonisent en raison de la haute température et de l'ambiance sèche. Un nettoyage poussé et donc long et coûteux en main d'oeuvre est nécessaire pour préserver la propreté. En outre, une personne doit rester à proximité durant les phases de cuisson pour la conduite et la surveillance. Le four ne peut donc fonctionner qu'en présence de personnel. L'énergie est consommée peu avant les repas, c'est-à-dire en pleine journée, en période de tarif d'énergie électrique élevée.

On connaît également le principe de la cuisson en ambiance vapeur à une température à peine supérieure (2 à 3°C) à la température à coeur souhaitée. On bénéficie ainsi d'une grande maîtrise du degré de cuisson. L'instant de fin de cuisson n'a pas besoin d'être particulièrement précis, compte tenu du fait que la température interne du four est sensiblement égale à la température à coeur souhaitée. Il n'est donc pas nécessaire de prévoir un temps de repos à la sortie du four. L'aspect du rosbif après tranchage est bien maîtrisé. Les aspects gustatifs, la tendreté et la jutosité sont très bien préservés indépendamment de la taille du rosbif et de la charge du four, c'est-à-dire du nombre de rosbifs cuits en même temps. La destruction des bactéries de la viande est très bien assurée en raison de la longue durée de la cuisson. Les pertes de poids du rosbif sont largement réduites.

Toutefois, la cuisson dure plusieurs heures, ce qui immobilise un four plus longtemps. Le rosbif ne présente pas l'aspect extérieur grillé qui peut être souhaité par le consommateur. Il peut donc faire l'objet d'un traitement ultérieur de coloration, sauce, etc. Ce type de cuisson ne nécessite pas de moyens sophistiqués, à l'exception d'une régulation de température très précise. A titre d'exemple, la cuisson peut être réalisée en poche dans un bain-marie dont la température d'eau est bien régulée.

La présente invention cherche à combiner les avantages des deux types de cuisson présentés ci-dessus et à obvier à leurs inconvénients.

La présente invention propose un procédé de commande de four adapté tant aux cuissons courtes qu'à des cuissons longues pouvant être effectuées de nuit en l'absence de personnel.

Le procédé de commande de four selon l'invention, comprend les caractéristiques de la revendication 1.

Cela permet d'effectuer des phases successives de cuisson à des températures déterminées avec précision et d'obtenir un rosbif présentant un aspect extérieur grillé grâce à une première phase à température élevée, puis à refroidissement permettant de refroidir les zones extérieures du rosbif et d'éviter qu'elles ne transmettent une chaleur excessive au coeur du produit et une phase de maintien en température au cours desquelles la température des différentes zones du produit s'homogénéise, le degré de cuisson étant alors déterminé non par la durée de la phase de maintien en température, mais par la seule température.

Avantageusement, le moyen de refroidissement du four commandé par le procédé comprend un moyen d'évacuation d'air chaud de l'espace intérieur.

Plus particulièrement, le moyen de refroidissement peut comprendre une soupape disposée entre la pompe et l'espace intérieur dans le sens de l'écoulement de l'air et apte à être obturée lorsque la pompe est à l'arrêt et à être ouverte lorsque la pompe est en fonctionnement. La soupape permet d'éviter des circulations non souhaitées d'air hors de la phase de refroidissement. La pompe peut être de type centrifuge.

Le moyen de refroidissement comprend un moyen d'injection d'eau. On peut ainsi faire baisser très rapidement la température du moyen de chauffage, par exemple des résistances électriques, grâce à la capacité calorifique élevée de l'eau. Il est donc particulièrement intéressant de prévoir une projection d'eau sur une résistance électrique de chauffage. La projection peut être assurée par un ventilateur et peut également être dirigée vers les parois de l'espace intérieur qui présentent une certaine inertie thermique en raison de leur épaisseur et des matériaux d'isolation disposés autour.

Le procédé de commande de four selon de l'invention, prévoit le déclenchement d'une étape de refroidissement forcé de l'espace intérieur d'un four initialement à une première température. Le refroidissement est poursuivi jusqu'à une deuxième température inférieure à la première température.

Avantageusement, on prélève de l'air de refroidissement d'un milieu extérieur, par exemple de l'air ambiant. La deuxième température sera supérieure à la température ambiante à l'extérieur du four.

En outre, on peut prévoir une étape supplémentaire de refroidissement forcé jusqu'à une troisième température inférieure à la deuxième température suivi d'une étape de maintien à la troisième température. D'autres étapes similaires vers des températures de plus en plus faibles peuvent être mises en oeuvre.

De préférence, l'humidité dans l'espace intérieur est estimée et contrôlée.

L'étape de refroidissement forcé comprend une projection d'eau à l'intérieur du four qui s'avère particulièrement efficace lorsque la température dans l'espace intérieur est supérieure à 100°, et une circulation d'air avec entrée d'air froid et sortie d'air chaud, plus efficace pour les températures inférieures à 100°.

Selon une forme de réalisation, un moyen de chauffage de l'espace intérieur du four commandé par le procédé de l'invention est apte à fonctionner selon un nombre n de puissances de chauffage non nulles. On mesure une température Tₑ de l'espace intérieur, si Tₑ< T_{c} - BP1, avec T_{c} une température de consigne et BP1 une plage de température, alors la puissance de chauffage P est réglée à la puissance maximale Pₘₐₓ. Si la température Tₑ est comprise entre T_{c} - BPᵢ et T_{c}- BPᵢ₊₁ avec i compris entre 1 et n, alors P est égal à j/n x Pₘₐₓ. Si la température Tₑ est supérieure à la température de consigne, alors P = 0, avec BPᵢ = αᵢ x p + βᵢ, p étant la pente de montée en température en degré/seconde, α étant une constante en seconde et β une constante en degré. Si la température Tₑ franchit à la hausse la valeur T_{c} - BPᵢ et si la pente p devient négative, la puissance P est augmentée de 1/n x Pₘₐₓ. Si Tₑ > T_{c} + 1°C, alors la puissance P est décrémentée de 1/n Pₘₐₓ, sinon j = n-i.

Dans un mode de réalisation de l'invention, 2 ≤ n ≤ 5. Par exemple, on peut avoir n = 3.

Dans un mode de réalisation de l'invention, on a αᵢ = 1/(n+1), en d'autres termes, BPᵢ = p/(n+1) + βᵢ.

Dans un mode de réalisation de l'invention, on a BP₁ = p/4 + 10°C et BP₂ = p/4+2°C.

Avantageusement, la pente est calculée pour chaque variation de température, de 0,5°C. On a donc p=0,5/Δt₁, Δt₁ étant la durée au cours de laquelle la température a varié de 0,5°C. Si Δt₁ est inférieur à 3 secondes, alors on calcule p pour une variation de température de 1° avec P=1/Δt₂, Δt₂ étant la durée au cours de laquelle la température varie de 1°. Si Δt₂ est inférieur à 3 secondes, alors p est égal à 2/Δt₃, Δt₃ étant la durée qu'émet la température pour varier de 2°C.Si Δt₃ est inférieur à 3 secondes, alors p est égal à 4/Δt₄ avec Δt₄ la durée mise par la température pour varier de 4°C. On peut ainsi éviter la prise en compte de phénomènes transitoires susceptibles de commandes erronées du four.

Le principe de cuisson par phases de température et de durée déterminée permet d'enchaîner des phases de coloration, de cuisson à coeur et de maintien éventuel avec une maîtrise complète de tous les paramètres permettant l'obtention d'une qualité optimale et en obtenant dans un temps court les avantages des cuissons de longue durée. La première phase de cuisson à haute température permet la formation d'une croûte qui limite la perte de poids et présente l'aspect habituel du rosbif. Le refroidissement permet d'éviter que les zones extérieures du rosbif ne transmettent une chaleur excessive à la zone de coeur. La phase de maintien en température permet de déterminer extrêmement précisément la température de cuisson à coeur. Le produit peut rester en phase de maintien pendant un temps très variable, compte tenu d'une température équivalente à la température à coeur souhaitée et de l'absence des effets néfastes de transfert thermique entre une zone plus chaude et une zone moins chaude et de l'absence de temps de repos nécessaire à l'homogénéisation des températures. La tendreté et la jutosité sont optimales. Les aspects gustatifs sont préservés, indépendamment de la taille du produit et de la charge du four. Les valeurs pasteurisatrices obtenues sont élevées, ce qui garantit une destruction satisfaisante des bactéries. L'encrassement du four est réduit et la phase de cuisson basse température en ambiance vapeur empêche la carbonisation des projections et leur adhérence aux parois du four. On parvient ainsi à réduire les pertes de poids des produits à cuire et à diminuer le temps et donc le coût du nettoyage du four après une cuisson.

On peut également prévoir un programme de cuisson de nuit. Les produits sont mis à cuire le soir avant le départ des opérateurs et sont sortis des fours le lendemain lorsqu'ils doivent être servis. La consommation énergétique du four est alors effectuée au tarif électrique de nuit, généralement bon marché. Le four est utilisé en temps masqué, sans personnel, ce qui facilite l'organisation d'une équipe à faible temps de travail. Le four est exploité hors des plages horaires du personnel pour un meilleur amortissement. Les produits peuvent être sortis du four dès l'arrivée du personnel le matin. Le four est alors disponible pour la cuisson d'autres produits.

La présente invention sera mieux comprise et d'autres avantages apparaîtront à la lecture de la description détaillée de quelques modes de réalisation pris à titre d'exemples nullement limitatifs et illustrés par les dessins annexés, sur lesquels :
- la figure 1 est une vue schématique d'un four pouvant être commandé par le procédé de l'invention ;
- la figure 2 est une vue schématique de détail de la figure 1 ;
- la figure 3 est une vue de détail du moyen d'introduction d'air froid ;
- la figure 4 est une vue en perspective de la figure 3 ; et
- la figure 5 est une vue du tableau de commande du four.

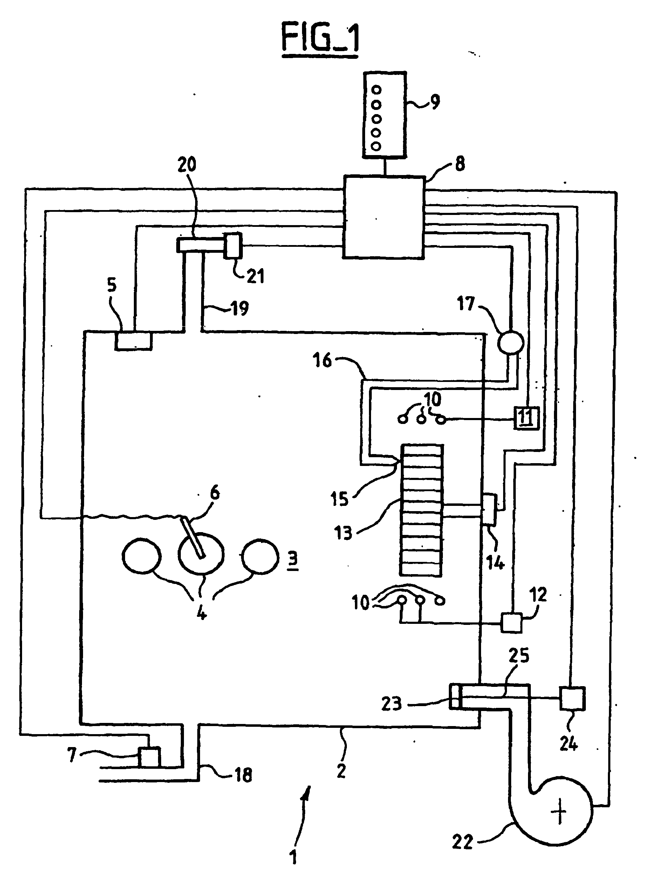

Comme on peut le voir sur la figure 1, le four 1 comprend une enceinte 2 définissant un espace intérieur 3. L'enceinte 2 est pourvue d'une porte, non représentée, et est de type calorifugée, comprenant, comme cela est connu, une paroi extérieure, une paroi intérieure et un matériau d'isolation disposé entre la paroi extérieure et la paroi intérieure. Pour des raisons de facilité de nettoyage et d'hygiène, les parois extérieure et intérieure pourront être réalisées en tôle d'acier inoxydable. Dans l'espace intérieur 3, peuvent être disposées des grilles, non représentées, permettant de disposer des plats ou des produits à cuire. On a représenté ici des rosbifs 4, de tailles différentes les unes des autres.

Le four 1 comprend un capteur 5 de la température Tₑ de l'espace intérieur 3, un capteur 6 de la température Tₚ au coeur des produits à cuire 4, se présentant sous la forme d'une sonde pouvant être piquée dans le produit 4, et un capteur 7 de mesure de la température T₁ du liquide qui se condense dans l'espace intérieur 3.

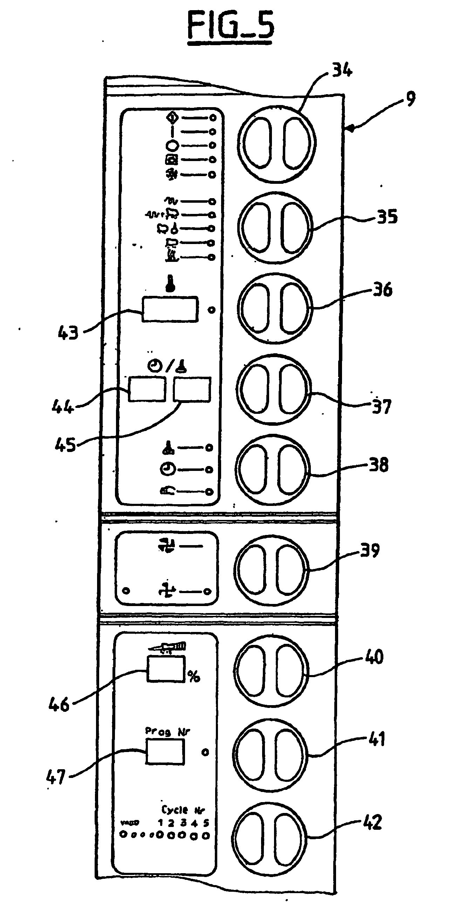

Les capteurs 5, 6 et 7 sont reliés, par exemple par des fils, à une unité de calcul 8 apte à interpréter les données reçues. L'unité de calcul 8 comprend un microprocesseur, une ou plusieurs mémoires, un bus de communication entre le microprocesseur et la mémoire et un ou plusieurs logiciels stockés dans la mémoire et aptes à être exécutés par le microprocesseur. L'unité centrale 8 est associée à un tableau de commande 9 permettant l'affichage d'informations, par exemple de la température Tₑ de l'espace intérieur 3 mesurée par le capteur 5, et des boutons de commande qui seront expliqués plus en détail en référence à la figure 5.

Le four 1 comprend, en outre, une pluralité de résistances de chauffage 10, ici trois, de forme générale circulaire, et commandées, l'une par une interface 11, par exemple un relais électromécanique, et les deux autres par une interface 12 qui peut être du même genre. Les interfaces 11 et 12 sont reliées à l'unité de calcul 8. Un ventilateur centrifuge 13 est disposé dans l'espace circulaire entre les résistances 10 et est entraîné par un moteur 14 également relié et commandé par l'unité de calcul 8.

A proximité du ventilateur 13, est disposée une buse 15 reliée à une conduite 16 sur laquelle est disposée une électrovanne 17 reliée et commandée par l'unité centrale 8. L'ouverture de l'électrovanne 17 permet de projeter de l'eau par la buse 15 sur les pales du ventilateur 13. L'eau est ainsi projetée lors de la rotation du ventilateur 13 sur les résistances 10 et se transforme en vapeur, ce qui permet d'augmenter le taux d'humidité dans l'espace intérieur 3.

Les variations de température à l'intérieur du four 1 peuvent provoquer des phénomènes de condensation, par exemple lors du refroidissement progressif du four en partant d'un état proche de la saturation de vapeur. Il se forme alors des condensats sur les parois du four qui s'écoulent vers le bas par une conduite 18 sur laquelle est monté le capteur 7 de mesure de la température des condensats.

Le four 1 comprend en outre une cheminée d'évacuation 19 montée dans une partie supérieure de l'enceinte 2 et équipée d'un clapet 20 mobile sous l'action d'un actionneur 21, par exemple un moteur électrique, relié à l'unité centrale 8. Le clapet 20 peut être fermé, ce qui empêche la circulation d'air entre l'espace intérieur 3 et l'atmosphère ambiante, ou ouvert. Le four 1 comprend un ventilateur 22, par exemple de type centrifuge, entraîné par un moteur électrique, non représenté, et dont la sortie débouche dans l'espace intérieur 3 et peut être obturée par une soupape 23 commandée par un actionneur 24, par exemple un moteur électrique, par l'intermédiaire d'une tige 25. L'actionneur 24 est relié à l'unité centrale 8.

Les résistances 10 permettent l'élévation de la température de l'espace intérieur 3. On peut régler la puissance de chauffe à 1/3 de la puissance maximale en alimentant une seule des résistances 10 par l'intermédiaire de l'interface 11, aux 2/3 de la puissance maximale par l'intermédiaire de l'interface 12, et à la puissance maximale par l'intermédiaire des deux interfaces 11 et 12. Le ventilateur 13 permet une circulation d'air dans l'espace intérieur 3 et une répartition de la chaleur produite par les résistances 10. Le ventilateur 13 permet également, en association avec les moyens de projection d'eau, d'élever le taux d'humidité dans l'espace intérieur 3 en répartissant l'eau sur les résistances 10, ce qui provoque l'évaporation immédiate de l'eau. La conduite 18 permet l'évacuation des condensats. Le moyen d'introduction d'air froid formé par le ventilateur 22 et les éléments associés et le moyen d'évacuation d'air chaud formé par la soupape 20 et les éléments associés, permettent un refroidissement rapide de l'espace intérieur 3 par introduction d'un fort volume d'air froid et évacuation d'une quantité correspondante d'air chaud, par exemple à un débit de l'ordre de plusieurs dizaines de m³/h. En outre, lorsque l'intérieur du four est à une température élevée, par exemple supérieure à 100°C, la projection d'eau par la buse 15 permet de refroidir très rapidement les résistances 10 dont l'alimentation aura été coupée, et également de refroidir les parois intérieures de l'enceinte 2 qui peuvent être à des températures très élevées. Dans ce cas, une partie de l'eau projetée par la buse 15 sera vaporisée et s'échappera par la conduite 19 et la soupape 20, tandis qu'une autre partie se condensera et sera évacuée par la conduite d'évacuation 18.

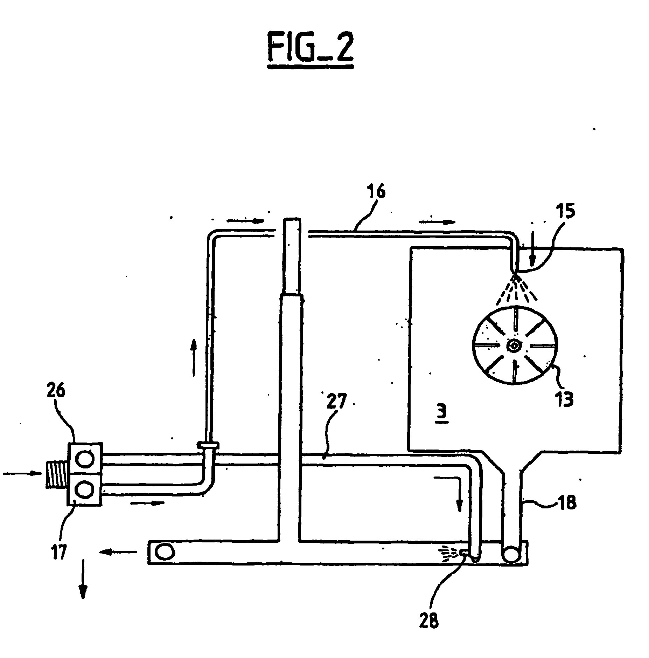

Sur la figure 2, est représentée une variante dans laquelle il est prévu une autre électrovanne 26 montée à côté de l'électrovanne 17 sur une conduite d'arrivée d'eau. L'électrovanne 26 est reliée à une conduite 27 qui alimente une buse 28 disposée dans la conduite 18 d'évacuation des condensats. On peut ainsi projeter de l'eau dans la conduite 18, ce qui garantit une bonne condensation de la vapeur susceptible de s'échapper par ladite conduite 18, dans le cas où les soupapes 20 et 23 sont fermées et où une forte quantité de vapeur est présente dans l'espace intérieur 3. Le capteur 7 n'a pas été représenté sur la figure 2.

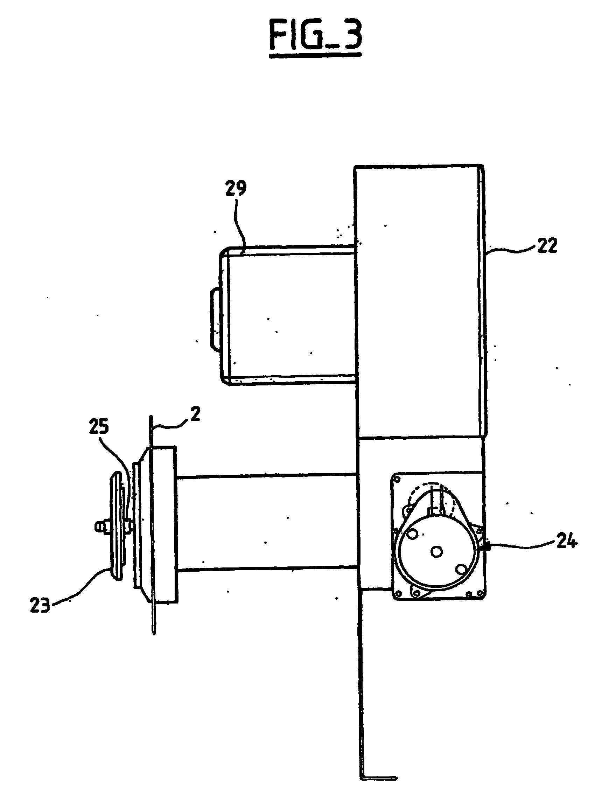

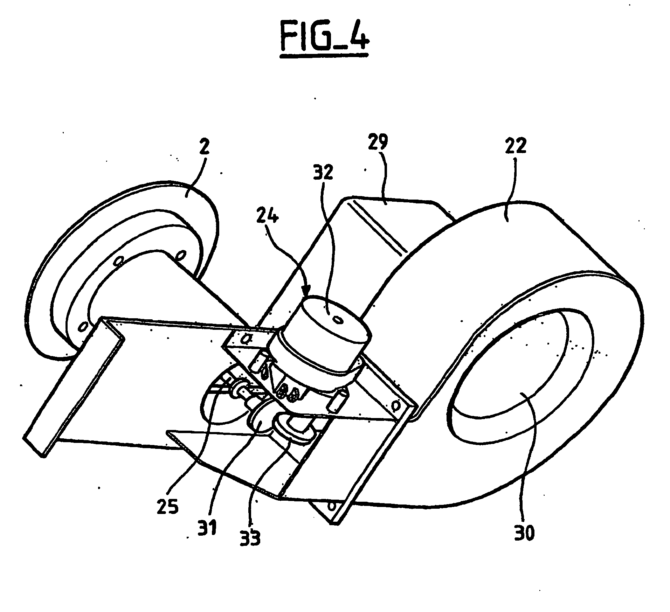

Sur les figures 3 et 4, est montré plus en détail le moyen d'introduction d'air froid. Le ventilateur 22 est entraîné en rotation par un moteur électrique 29 et présente une entrée d'air 30. La figure 4 est partiellement en éclaté pour mieux voir la tige 25 pourvue à son extrémité opposée à la soupape 23 d'une surface d'appui 31. L'actionneur 24 comprend un moteur électrique 32, capable d'entraîner en rotation une came 33 en contact avec la surface d'appui 31. Un ressort, non représenté, est associé à la tige 25 pour mettre la surface d'appui 31 en contact avec la came 33. Le moteur 32 pourra être du type pas à pas. Dans une première position, la soupape 23 sera ouverte, voir figure 3. Dans une autre position, la came 33 ayant effectué une rotation d'un angle de 180°C, la surface d'appui 31 aura pu se déplacer à l'opposé de l'enceinte 2, entraînant la tige 25 et la soupape 23 qui se sera donc déplacée en direction de l'enceinte 2 dans une position obturée.

Sur la figure 5, est montré plus en détail un mode de réalisation du tableau de commande 9 pourvu de boutons 34 à 42. Le bouton 34 possède une position d'arrêt, une position de mise en marche, une position de refroidissement et une position de nettoyage automatique. Le bouton 35 permet le choix du mode de fonctionnement, par exemple une cuisson sèche avec air pulsé de 0 à 250°C, une cuisson mixte avec air pulsé et vapeur de 30 à 210°,C une cuisson vapeur surchauffée à 105°C, une cuisson vapeur de 30 à 98°C et une remise à température. Le bouton 36 sert au réglage de la température de consigne T_{c}. Un afficheur 43 est disposé à proximité et affiche la température mesurée Tₑ. Le bouton 37 sert au réglage de la durée de cuisson ou de la température à coeur. A proximité, est disposé un afficheur 44 de durée et un afficheur 45 de température à coeur.

Le bouton 38 sert au choix du mode de fin de cuisson, avec une fin de cuisson déterminée par le capteur de température à coeur 6, une minuterie, ou une commande manuelle. Le bouton 39 permet de régler la vitesse de rotation du ventilateur 13. Le bouton 40 permet de régler le taux d'humidité dans l'espace intérieur 3. Un afficheur 46 de taux d'humidité est disposé à proximité. Le taux d'humidité peut être mesuré par un capteur qui n'a pas été représenté sur la figure 1. Le bouton 41 permet de choisir un numéro de programme de cuisson avec affichage du numéro sélectionné sur l'afficheur 47 situé à proximité. Le bouton 48 permet de choisir un numéro de cycle, un cycle étant compris comme une partie d'un programme.

On peut ainsi programmer des cycles et programmer des programmes au moyen de ces différents boutons de commande. Bien entendu, des programmes peuvent être chargés dans la mémoire de l'unité centrale 8 en usine et ne pas être modifiés par la suite. Toutefois, il est intéressant de laisser l'utilisateur créer de nouveaux programmes selon ses besoins ou modifier des programmes préchargés. On comprend donc que le four 1 est équipé de moyens permettant un réglage fin du mode de cuisson. Par exemple, la réduction de la vitesse de ventilation permet d'éviter le dessèchement de produits tels que le riz ou les pâtes lors d'opérations de remise en température.

En utilisation courante, un utilisateur commencera par mettre le four en marche au moyen du bouton 34, puis choisira un programme de préchauffage au moyen du bouton 41 et démarrera la chauffe au moyen du bouton 34. Enfin, après avoir chargé le four de produits à cuire, il choisira un programme de cuisson au moyen du bouton 41 et démarrera la cuisson au moyen du bouton 34.

La cuisson sèche est particulièrement utilisée pour la pâtisserie et la viennoiserie qu'il est nécessaire de sécher. La cuisson mixte est utilisée pour la rôtisserie, les pâtisseries qu'il est nécessaire d'humidifier, les crustacés, et les poissons. La position vapeur surchauffée permet un gain de temps de 10 à 20% par rapport au mode vapeur, pour les produits délicats tels que les pommes de terre, les crustacés, les légumes verts surgelés. La cuisson vapeur est utilisée pour la décongélation, la cuisson de légumes et poissons, les cuissons basse température et les produits sous vide. La position de régénération d'assiettes permet de réchauffer sans les dessécher les assiettes dressées et les barquettes. La consigne de température peut être modifiée entre 100 et 140° C en général. On peut prévoir un cycle de mise en température des assiettes limitant la condensation sur celles-ci.

Pour plus de précision, on prévoit que sans action sur le bouton 36, l'afficheur 43 indique la température de consigne T_{c}. Une action sur ce bouton fait afficher la température réelle du four. L'afficheur est éclairé lorsque le four est en chauffe et éteint lorsque la température de consigne T_{c} est atteinte.

A titre d'exemple, on a réalisé des essais sur trois rosbifs avec une cuisson de type standard et une cuisson dans un four conforme à l'invention.

| CUISSON EFFECTUEE DANS LE FOUR 1 | | CUISSON EFFECTUEE DANS LE FOUR STANDARD | |
|---|---|---|---|
| Charge : - 3 rosbifs (A ; B ; C) | | Charge : - 3 rosbifs (A ; B ; C) | |
| Principe de cuisson : (5 phases) | | Principe de cuisson : (1 phase) | |
| | | | |
| - Mode sec 230°C 20 min | | - Mode mixte 180°C sonde à coeur 40°C | |
| - Mode refroidissement 70°C | | | |
| - Mode vapeur 70°C sonde à coeur 50°C | | | |
| - Mode refroidissement 60°C | | | |
| - Mode vapeur 60°C sonde à coeur 55°C | | | |
| | | | |
| Poids initial : | Pertes en poids | Poids initial : | Pertes en poids |
| | | | |
| A: 2,612 kg | 16,3% | A : 2,722 kg | 24,7% |
| B : 2,456 kg | 17,2% | B : 2,372 kg | 30,8% |
| C : 1,126 kg | 20% | C : 1,152 kg | 36,7% |
| | | | |
| - Durée de la cuisson : **1 h 51 mn** | | - Durée de la cuisson : **1 h 15 mn** | |
| - Stabilisation de la température à coeur voulue à : 55,9°C - durée : 2 h 04 min | | - Stabilisation de la température à coeur voulue à : 57,9°C - durée : 1 h 53 min | |
| - Inertie : 0,8°C | | - Inertie : **17,9°C** | |

On comprend donc que l'invention permet de bien meilleures maîtrises de la cuisson, tant en terme de température à coeur que d'aspect du produit. Dans l'essai effectué dans le four standard, le rosbif C de plus faible poids est entièrement gris et a donc été cuit de façon excessive. Au contraire, dans la cuisson effectuée dans le four selon l'invention, les rosbifs A, B et C présentent une croûte grillée habituelle, une zone grisée de faible épaisseur, de l'ordre de 5 mm et une zone de coeur de couleur rouge, appréciée par la clientèle sur le reste du rosbif. On parvient donc à cuire des rosbifs de poids très différents, de la même façon, avec les mêmes températures et les mêmes durées, ce qui représente une importante économie de la main d'oeuvre nécessitée par la surveillance de la cuisson dans un four standard.

En outre, les pertes de poids sont réduites de l'ordre de 30 à 40%, ce qui représente une économie importante.

Si on veut utiliser une cuisson à nombre de phases plus faible, on peut prévoir pour des rôtis de boeuf, une phase de coloration à 210°C en air sec pendant 15 minutes, puis refroidissement et une phase de cuisson à coeur en atmosphère saturée de vapeur à 60°C, jusqu'à atteindre une température à coeur égale à 52°C Bien entendu, le four selon l'invention est adapté à la cuisson de tous types d'aliments et on peut prévoir jusqu'à une centaine de programmes de cuisson adaptés aux différents types de viandes, aux légumes, aux pains et aux pâtisseries, aux assiettes complètes, à la décongélation, etc.

L'unité centrale 8 de commande du four 1 peut être pourvue d'une régulation de type PID, avec un terme intégral faible et un terme dérivé fort pour une régulation précise. En fonction des puissances possibles Pₘₐₓ/3, 2Pₘₐₓ/3 et Pₘₐₓ, on prévoit des bandes proportionnelles de commande de puissance.

Si Tₑ < T_{c}-BP1, alors P=Pₘₐₓ.

Si T_{c}-BP2 > Tₑ ≥ T_{c}-BP1, alors P = 2Pₘₐₓ/3.

Si T_{c} > Tₑ ≥ T_{c}-BP2, alors P=Pₘₐₓ/3.

Si Tₑ ≥ T_{c}, alors P=0.

Les bandes proportionnelles BP1 et BP2 dépendent de la pente p de la courbe de la température de l'espace intérieur. La pente p est calculée en permanence d'après la moyenne des cinq dernières valeurs de pente instantanée calculée. La pente instantanée est calculée en mesurant la durée nécessaire pour que la température varie de 0,5°C Si la durée est inférieure à 3 secondes pour une variation de 0,5°C, alors la durée sera mesurée pour une variation de 1°C. Si la durée est inférieure à 3 secondes pour une variation de 1°C, alors la durée sera mesurée pour une variation de 2°C. Si la durée est inférieure à 3 secondes pour une variation de 2°C, alors la durée sera mesurée pour une variation de 4°C.

On peut prendre BP1 = p/4 + 10°C et BP2 = p/4 + 2°C Si la température décroît, on considère p=0. Pour éviter des basculements trop rapides des relais de commande des résistances électriques, on interdit tout changement d'état de chauffe pendant 3 secondes à sa mise en fonctionnement et à sa mise au repos. En d'autres termes, la durée entre deux commutations successives de l'un quelconque des relais de commande des résistances est au minimum de 3 secondes. La température Tₑ de l'espace intérieur est comparée à la température de consigne T_{c}, à T_{c} - BP1 et à T_{c} - BP2. Dans le cas où après franchissement d'une de ces valeurs, la pente p devient négative, ce qui correspond à un manque de puissance du four qui ne transfère plus assez de chaleur au produit à cuire, on déclasse le niveau de puissance, c'est-à-dire qu'on passe à la puissance supérieure jusqu'à au moins l'atteinte de la consigne. Si, après le franchissement de la consigne T_{c}, la température dépasse de 1°C ladite consigne T_{c}, on repasse au niveau de puissance inférieur, sinon on reste en puissance déclassée.

## Revendications

1. Procédé de commande d'un four, comprenant une enceinte définissant un espace intérieur apte à recevoir des aliments devant être cuits, un moyen de chauffage de l'espace intérieur, *un ventilateur (13) de circulation d'air dans l'espace intérieur (3)*, et un moyen de commande du moyen de chauffage, dans lequel l'espace intérieur étant à une première température de cuisson, on déclenche une étape de refroidissement forcé de l'espace intérieur jusqu'à une deuxième température de cuisson inférieure à la première température de cuisson, afin de réaliser une cuisson par phases de température,
*le refroidissement étant commande par le moyen de commande,*
*le refroidissement étant effectué par injection d'eau et introduction d'air froid dans l'espace intérieur au moyen d'une pompe à air (22).*

2. Procédé selon la revendication 1, dans lequel on prélève de l'air de refroidissement dans un milieu de temperature inférieure à la première température.

3. Procédé selon la revendication 2, dans lequel on prélève de l'air ambiant, la deuxième température étant supérieure à la température ambiante autour du four.

4. Procédé selon la revendication 3, dans lequel on met en oeuvre une étape suplémentaire de refroidissement forcé jusqu'à une troisième température inférieure à la deuxième température, suivie d'une étape de maintien à la troisième température.

5. Procédé selon l'une quelconque des revendications 1 à 4, dans lequel l'humidité dans l'espace intérieur est estimée et contrôlée.

## Claims

1. Method of controlling an oven including an enclosure defining an interior space adapted to receive foods to be cooked, means for heating the interior space, a fan (13) for circulating air within the interior space (3), and means for controlling the heating means, in which method, the interior space being at a first cooking temperature, a step is initiated of forced cooling of the interior space to a second cooking temperature lower than the first cooking temperature, so that cooking can be carried out in temperature phases,
- whereby the cooking is controlled by the controlling means,
- whereby the cooking is carried out by water injection and, by means of an air pump, by cool air introduction into the interior space (22).

2. Method according to Claim 1, in which cooling air is drawn in from an environment at a temperature lower than the first temperature.

3. Method according to Claim 2, in which ambient air is drawn in, the second temperature being higher than the ambient temperature around the oven.

4. Method according to Claim 3, including a supplemental step of forced cooling to a third temperature lower than the second temperature followed by a step of maintaining the third temperature.

5. Method according to any of Claims 1 to 4, in which the humidity in the interior space is estimated and controlled.

## Patentansprüche

1. Verfahren zum Steuern eines Ofens mit einer einen Innenraum definierenden Kammer, die zu kochende Nahrungsmittel aufnehmen kann, einem Mittel zum Heizen des Innenraums, einem Ventilator (13) um Luft in dem Innenraum (3) in Umlauf zu bringen, und einem Mittel zum Steuern des Heizmittels, bei dem man, wenn sich der Innenraum auf einer ersten Kochtemperatur befindet, einen Schritt der Zwangskühlung des Innenraums bis zu einer zweiten Kochtemperatur, die niedriger ist als die erste Kochtemperatur, einleitet, um ein Kochen mit Temperaturphasen zu realisieren,
- wobei die Kühlung bei dem Steuermittel gesteuert wird,
- wobei die Kühlung durch Wassereinspritzen und durch Einführen mit einer Luftpumpe (22) von kalten Luft in den Innenraum.

2. Verfahren nach Anspruch 1, bei dem man Kühlluft aus einer Umgebung mit einer Temperatur ansaugt, die niedriger ist als die erste Temperatur.

3. Verfahren nach Anspruch 2, bei dem man Umgebungsluft ansaugt, wobei die zweite Temperatur über der Umgebungstemperatur um den Ofen herum liegt.

4. Verfahren nach Anspruch 3, bei dem man einen zusätzlichen Schritt der Zwangskühlung bis zu einer dritten Temperatur, die niedriger ist als die zweite Temperatur, mit einem folgenden Schritt des Haltens auf der dritten Temperatur durchführt.

5. Verfahren nach einem der Ansprüche 1 bis 4, bei dem die Feuchtigkeit im Innenraum geschätzt und reguliert wird.
